# EUROPEAN PATENT SPECIFICATION

(11) **EP 0 748 950 B1**
(45) Date of publication and mention of the grant of the patent: **21.07.1999**
(21) Application number: 96850086.8
(22) Date of filing: 02.05.1996
(51) Int. Cl.: F16F 9/342

(54) **Shock absorber device and use thereof**
Stossdämpfer und deren Benutzung
Amortisseur et son application

(30) Priority: 18.05.1995 SE 9501847
(43) Date of publication of application: 18.12.1996
(73) Proprietor: ÖHLINS RACING AB, 194 27 Upplands Väsby (SE)
(72) Inventor: Eriksson, Magnus, SE-741 31 Knivsta (SE); Fagrell, Niklas, SE-183 44 Täby (SE); Larsson, Lennart, SE-194 54 Upplands Väsby (SE)
(74) Representative: Karlsson, Berne

(56) References cited:
- EP-A- 0 299 588
- US-A- 3 887 224
- US-A- 4 452 437
- US-A- 4 934 749
- PATENT ABSTRACTS OF JAPAN vol. 014, no. 428 (M-1025), 14 September 1990 & JP-A-02 168038 (TOKICO LTD), 28 June 1990,
- PATENT ABSTRACTS OF JAPAN vol. 017, no. 186 (M-1395), 12 April 1993 & JP-A-04 337138 (ORIJINARU BOTSUKUSU:KK), 25 November 1992,

## Description

### TECHNICAL FIELD

The present invention relates to a device recited in the preamble of claim 1.

### STATE OF THE ART

The present invention is a further development of i.a. the shock absorber according to British Patent 2,202,921. During the compression movement of the piston, well before the end position for compression, media flows from the upper sides of the pistons to their lower sides, on the one hand via passages which are arranged in the pistons and which are regulated with the aid of springs/spring packs (shims) arranged on the pistons, and, on the other hand, via the central recess in the piston rod. When the pistons assume a predetermined position near the end position, the elongate member arranged securely in the cylinder begins to enter the recess, and the media flow begins to be constricted, the result of which is that the damping resistance of the shock absorber is increased. Upon continued compression, the elongate member runs in with an ever greater degree of penetration, resulting in increased constriction of the media flow, and a higher damping resistance of the shock absorber, etc. At the end position there is total constriction of the media flow, resulting in maximum damping resistance of the shock absorber. Upon the following expansion movement of the shock absorber, the opposite takes place. The elongate member is removed from the recess (or vice versa) and leads to a decreasing reduced shock absorption. When the elongate member has completely left the recess, and there is a free media flow through the central recess, the damping resistance assumes the lowest value, and the shock absorber can be compared, at this function stage, with a standard shock absorber, both in compression movement and expansion movement.

In patent abstracts of Japan, Vol. 14, No. 428 (M-1025) it is disclosed how to arrange an elongated pin member in relation to a recess adapted in a piston rod which supports two pistons arranged after each other. The elongated member is constantly positioned in said recess. It is provided with different diameters along its extension in the longitudinally direction in order to effect different fluid paths through the recess in dependence of the positions between the cylinder and the pistons. In an initial stage of the assembling procedure of the shock absorber the elongated member is able to effect a radial displacement in order to be able to properly enter the recess.

### DISCLOSURE OF THE INVENTION

### TECHNICAL PROBLEM

In order to obtain clearly defined and predictable damping characteristics in current types of shock absorber, which are to be capable of being produced in series, it is important that the stated constriction of the medium at the said end position can be carried out essentially in an identical manner in different types of shock absorbers. The construction must be non-critical from the assembly point of view. The centring of the elongate member in the recess is important for attaining the effects which are sought. Nor will it do to introduce too much control and adjustment work in association with the production of shock absorbers. It is important to get a stabilization in the longitudinal direction for the elongated member at the same time this one is displacable in the radial direction. The invention has the object of solving these problems, and it proposes a solution in which the components involved are self-adjusting from the point of view of movement in relation to each other, and in which the adjusted components in question assume and maintain their set positions.

### SOLUTION

That which can principally be regarded as being characteristic of a device according to the invention is that the elongated member is in this case applied to an end part of the cylinder by means of a holder which has a recess running through it for the elongate member. The holder has a first surface which interacts, preferably via an elastic element, with a flange on the elongate member. The holder in this case causes the flange to press against a second surface on or at the said cylinder part, so that the elongate member is controlled in the axial direction and is displaceable against friction in the radial direction. An O-ring can be used in this case as the elastic element. In one embodiment, the elastic element can effect the said friction function. The elastic element is in this case preferably subject to an axial action, and the friction function is such that it allows the elongate member to remain in the laterally offset, new position for the elongate member. The elastic element or elastic elements can interact with the upper and/or lower surfaces of the flange.

In one embodiment, the holder can have the outer shape of a truncated cone and can be fixed to the cylinder via a flange which is arranged at the maximum diameter of the truncated cone. The truncated cone also has an outer surface at the smallest diameter of the truncated cone. At the last-mentioned outer surface, the holder interacts with the elastic element and/or the flange of the elongate member.

### ADVANTAGES

By means of what has been proposed above, an effective and predictable construction function is obtained for the media flow in the central recess also by means of an elongated member which is intractable with the recess of the piston rod only in the inner position of the piston rod. The assembly and inspection costs can be kept down in serial production.

### DESCRIPTION OF THE FIGURES

A presently proposed embodiment of a device and a use thereof according to the invention will be described here in below, with reference being made to the attached drawings, in which:
- Figure 1: shows, in longitudinal section, the structure of a complete shock absorber with accumulator function.
- Figure 1a: shows, in longitudinal section, the fastening of a guide pin incorporated in the shock absorber according to Figure 1, and the mounting of this guide pin, and
- Figs. 2-5: show, in longitudinal section, parts of the shock absorber according to Figure 1, and the functions of these parts at different stages of the functioning of the shock absorber.

### DETAILED EMBODIMENT

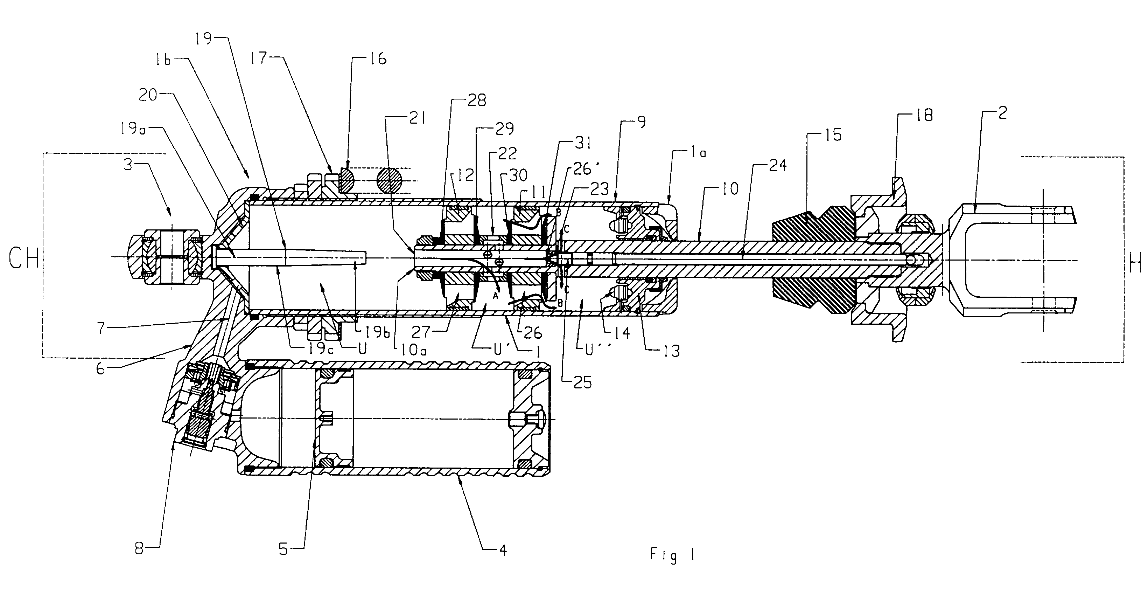

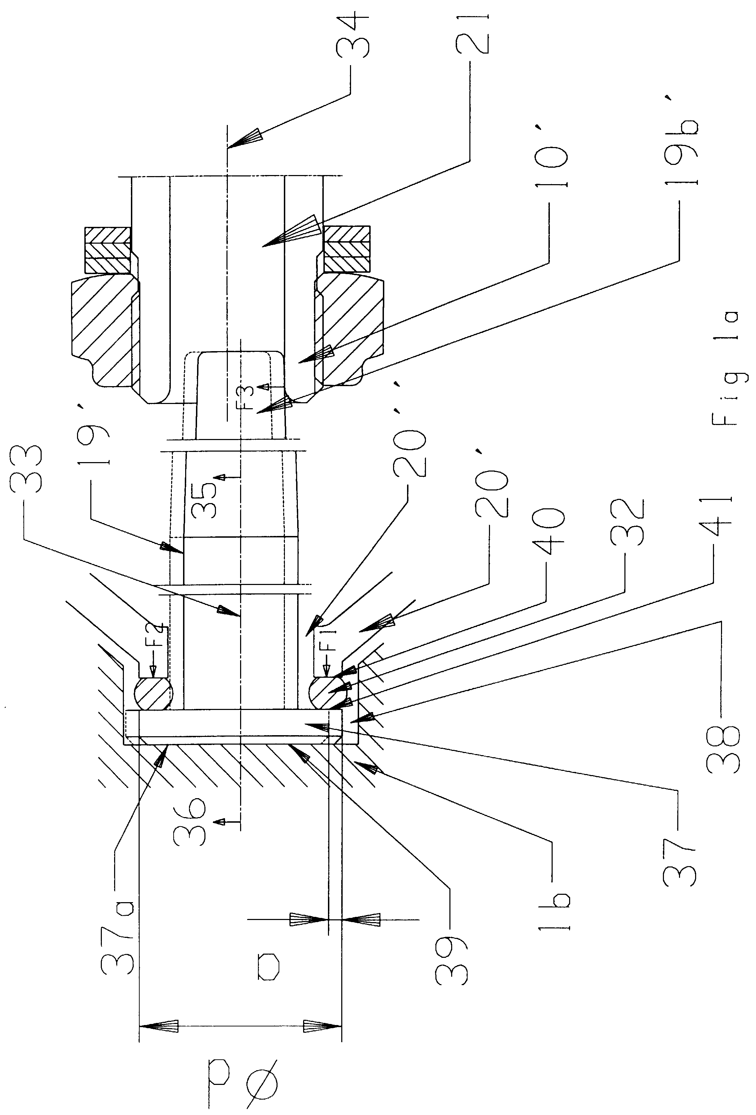

Figure 1 shows a basically known shock absorber 1 which is designed with a structure according to the invention. The shock absorber includes fastening parts 2 and 3 for fastening on wheel H and chassis CH (indicated symbolically). Also included is an accumulator 4, which has a floating piston 5. The shock absorber and its accumulator are in communication with one another via a part 6 which is provided with an internal connection channel 7 and, arranged in the latter, adjustment members 8. The shock absorber is provided with a cylinder 9 and a piston rod 10. The latter forms part of a piston and piston rod arrangement which also includes, in addition to the piston rod 10, two pistons 11, 12 which are arranged securely one after the other on the piston rod. At the first end la of the shock absorber, the cylinder is provided with conventional guiding and sealing arrangements 13, which bear a resilient member against which the cylinder strikes in the end position for expansion. The fastening arrangement 2 includes an external spring member 15. Only one main spring, partially indicated, is shown by 16, which is tensioned between an external flange 17 on the cylinder and an external flange 18 on the piston (at the fastening arrangement 2).

At the other end (upper end) 1b of the shock absorber, the cylinder is provided with an elongate member 19 which is arranged securely inside the cylinder. The member 19 (which has a pin shape) is fastened in the cylinder end 1b at its one end 19a by means of a holder 20. The free end of the member is indicated by 19b. At its rear end 19a, the member 19 is essentially cylinder-shaped and narrows at its middle part 19c and has the shape of a truncated cone. The pin-shaped member has a longitudinal extent which constitutes about ¼ of the length of the cylinder. At its free end 10a, the piston rod is provided with a central recess 21. At the end position of the shock absorber upon compression, the free part 19b can penetrate into the recess 21 by a degree of penetration which is a function of the degree of compression of the shock absorber. When the piston rod penetrates or extends inwards (the shock absorber is compressed) by approximately half its possible compression distance, the interaction between the member 19 and the recess 21 arises, and this interaction increases as the degree of compression increases (see below). The pistons 11, 12 divide the internal space of the cylinder into three spaces. A first space U is situated above the inner piston 12. This space varies as a function of the degree of compression. A second space U' is situated between the pistons and constitutes a fixed space. A third space U'' is situated below or outside the outer piston 11 and is a variable space. The piston operates in a working medium (for example hydraulic oil with additives). In the position shown in Figure 1, the medium can flow, upon continued compression movement, in the directions of the arrows A and C from the space U, via the recess 21 and first passages (for example transverse) 22, to the space U', and from the space U, via recesses 21 and second passages 23, to the space U''. Onward movement rearwards in the rearward-leading channel of the piston rod is prevented by a stopper element 25. The recess 21 has a constriction element 26 at the passages 23.

The pistons 11 and 12 are provided with passages 26, 27, at which springs/spring packs/shims are arranged and function as follows. The springs for the piston 12 have been indicated by 28 and 29, and those for the piston 11 have been indicated by 30 and 31. At the function stage according to Figure 1 (i.e. upon continued compression movement) the medium can flow from the space U' to the space U'' via the springs 31. The medium is thus shunted past the piston 11.

Figure 1a shows the principle of the fastening of the member 19' by means of the holder 20' which has a recess 20'' for the member 19'. The member can be displaced in the lateral direction with a friction function which is established with the aid of a resilient element 32. In the illustrative embodiment, there is a discrepancy or parallel offset, created during production, between the centre axis 33 of the member 19 and the centre axis 34 of the recess 21'. In order to ensure that transverse forces will not occur in the member 19 and the piston and piston rod arrangement in accordance with the above, and in order to ensure that the appropriate interaction will take place between the first and second passages (22, 23 in the Figure) and the pin-shaped member, it is important that during the first compression stroke which the shock absorber executes, the member 19' can be offset in parallel in the directions of the arrows 35, 36, so that the centre lines 33 and 34 essentially coincide, i.e. so that the member and the recesses are aligned with each other.

According to the invention, the movement takes place counter to friction, which is adapted so that the member subsequently (i.e. after the parallel displacement) remains in its new parallel-displaced position and is still fixed in its longitudinal fastening. A flange 37 on the member 19, 19' is used for this purpose. The flange is arranged in a recess 38 in the cylinder wall, and the lower surface 37a of the flange can slide against a corresponding surface 39 on the cylinder wall in question, which last-mentioned surface constitutes the bottom surface of the recess 38. In the illustrative embodiment, the resilient element consists of an O-ring and is pressed together radially by means of a holding force F1, F2 which is effected by the holder 20'. The holder has a lower surface 40 with which it presses the element 32 against an upper surface 41 of the flange.

When the member 19' enters the recess 21', and in the event of the discrepancy which has just been mentioned, the front parts of the member 19' come to interact with the front part of the piston rod, resulting in a lateral force F3 being established. A lateral movement with a magnitude a in this case occurs in respect of the member 19', whose diameter has been indicated by d.

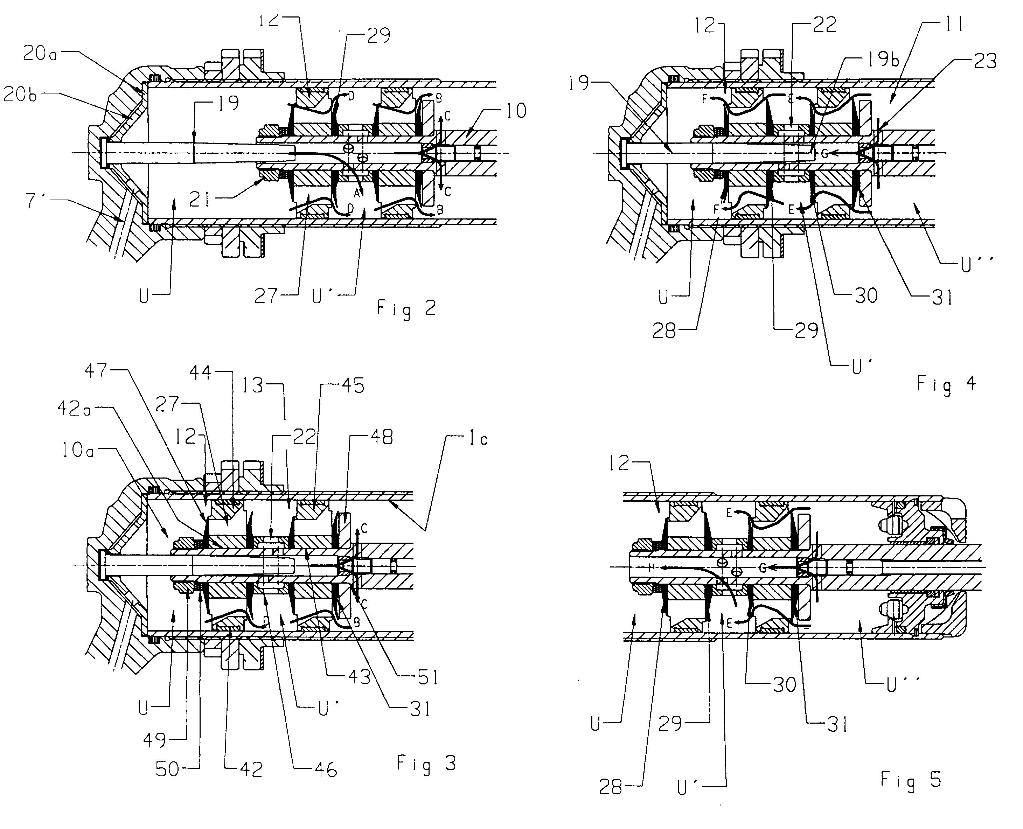

According to Figure 2, the holder has an upper fastening flange 20a and is provided with passages 20b to permit media communication between the space U and the connection 7' to the accumulator.

In Figure 2 the member 19 has partly entered the central recess 21 in the piston rod. The flow A is in this case constricted, and a flow D via the spring 29 is created. Media can flow from the space U to the space U' via the passages 27. The total damping force now becomes greater than in the function stage according to Figure 1.

In the function stage according to Figure 3, the member 19 has completely blocked the central recess of the piston rod, and all the flow is in accordance with D from U to U'. Maximum damping force occurs here at the compression position.

In Figure 4, the positions are the same as in accordance with Figure 3, but the piston rod is on the way out, i.e. the return stroke or expansion stroke has been initiated. Flows E, F and G which are counter to the directions of flow in accordance with Figure 3 have materialized. There is maximum damping force for the return stroke. Media are conveyed via the springs 30, 31 from U" to U' and via the springs 28, 29 from U' to U.

Figure 5 corresponds to the case in accordance with Figure 1, but operating in the opposite direction. At this stage of functioning, the return damping is completely identical to a conventional shock absorber. Media flow from U'' to U' via E and to U via the central recess. The springs of the piston 12 are not opened in this case.

The principal function of the shock absorber is thus that a guide pin (the member 19) regulates the flow of oil (the medium) so that the damping force is generated by first one piston, then successively by two pistons. The successive transition takes place by virtue of the fact that the guide pin has a conical part which, when it enters in the centre line of the piston rod, gradually constricts the flow and forces the latter through the piston 11. If the pin were to be mounted securely, every little lateral displacement of the piston rod would lead to the pin being subjected to substantial transverse forces, with resulting wear and disrupted function. In accordance with the above, the guide pin is mounted in such a way that it is fixed in the axial direction, but is permitted to move in the radial direction. By means of this fastening principle, the pin can adjust itself according to the piston rod, even when the latter is slightly laterally displaced. The distance between the flange of the guide pin and the holder is such that the O-ring is clamped axially in accordance with the above. The diameter of the hole in the holder is about 0.5 mm greater than the cylindrical part of the guide pin, which means that the guide pin can be moved radially to a corresponding extent. The function of the O-ring is that if the guide pin has been forced to move radially because, when the piston rod passes over the guide pin, the centre hole of the piston rod does not lie in the theoretical centre of the cylinder tube, the guide pin will remain in its new position as a result of the friction of the O-ring.

The damping characteristics for the above-mentioned shock absorber, here called a PDS, can be produced taking as a starting point a standard motocross MC with linkage to the shock absorber (standard absorber geometry). This linkage has a progressively decreasing transmission from wheel movement to shock absorber movement, i.e. for the same wheel displacement, the shock absorber moves less in the rebound position than in the compressed position. This means that the wheel "senses" different shock absorber characteristics at different positions. The novel system (shock absorber) PDS can simulate, without linkage (PDS geometry), suspension and damping of standard motocross MC with linkage. The progressivity in accordance with motocross MC can be achieved wholly or partially with the present shock absorber.

Stage 1: Attachment points in frame and swivel arm where the shock absorber can be fastened and at the same time gives the best possible progressive transmission curve that can be chosen.

Stage 2: Standard absorber's damping curve (not position-dependent) is converted to damping curves for the rear wheel (position-dependent) with the aid of the transmission curve for shock absorber geometry.

Stage 3: The damping curves for the rear wheel (position-dependent) are converted to damping curves for the PDS shock absorber (position-dependent) with the aid of the transmission curve for PDS geometry. This gives what an "optimal" position-dependent shock absorber would perform in different positions.

Stage 4: The PDS absorber can give four different damping curves (two for the compression movement and two for the return movement) with stepless transition between them in relation to the conical guide pin. Two positions on the wheel are selected where the PDS absorber would have correct damping curves in accordance with Stage 3. These two positions were on the one hand a "drive position" at about half the total wheel movement, and on the other hand a position in the compressed state at about 5/6ths of the total wheel movement.

Stage 5: The four damping curves are applied as four polynomials. 4th order for the compression curves and 3rd order for the return curves. At the same time, four or three speeds are selected where the PDS absorber would give correct damping forces in the two positions according to Stage 4, i.e. 8 + 6 = 14 polynomial factors and 14 set values.

Stage 6: The pressure drop in the flow of oil through the centre hole of the piston rod is so great, in the case of high flows, that the valve in the piston is opened and takes part of the flow. The sum of the flow through the valve and the flow through the centre hole is given by the speed of the shock absorber, but the distribution is unknown. In order to calculate these flows, it is necessary to find the distribution which results in the pressure drop across the two constrictions being exactly the same.

Stage 7: The 14 polynomial factors according to Stage 5 and the pressure drop according to Stage 6 together give 8 + 6 damping forces (actual values) at the 4 + 3 speeds according to Stage 5.

Stage 8: By varying the 14 polynomial factors, while satisfying the limitations in Stage 6, it is possible to minimize the differences between the 14 actual values and the set values by means of the method of least squares. The 14 polynomial factors in this way gave the four different damping curves according to Stage 4.

Stage 9: The four damping curves are checked so that they are physically feasible. The great problem is the compression damping on piston 2, which is to interact with the centre hole. The character of the centre hole is progressive (quadratic curve), and at high piston speeds (which mainly occur during the compression movement) the valve of the second piston has to take an ever greater part of the flow. The character of the valve must then be degressive in order to compensate for the character of the centre hole, if the total damping curve is to be linear. The said damping curves are realizable.

It is therefore possible to calculate the damping characteristics at two different wheel positions and use a stepless transition between these and simulate the damping function in an MC with progressive linkage and position-dependent damping.

The invention is not limited to the embodiment in accordance with the above, but can be modified within the scope of the following patent claims and the inventive concept. The PDS system according to the invention can be used in combinations with mechanical linkage, as well, for example with the above mentioned mechanical linkage. The shock absorber is useful for cars, vehicles, motor cycles, etc.

## Claims

1. Device for guaranteeing effective, essentially non-critical, function in a shock absorber (1) which has a cylinder (9) and arranged in this cylinder, a piston and piston rod arrangement (10, 11, 12), which includes at least two pistons (11, 12) arranged one after the other on a piston rod (10), and a central recess (21) for media flow between the upper and lower sides (U, U', U") of the pistons, and an elongate member (19) which is arranged inside the cylinder and which is intended to extend into the recess with a degree of penetration, which is a function of how near the pistons are situated in relation to an end position in order to vary the damping capacity of the shock absorber, as a function of the degree of penetration, by acting on the said media flow through the recess and wherein the elongate member (19, 19') is mounted such that it can be displaced in the transverse direction (35, 36) of the cylinder, and when there is a discrepancy (a) between the centre axes (33, 34) of the recess and of the elongate member, it is possible for the elongate member, as a result of the interaction between the elongate member and the piston and piston rod arrangement via the recess (21), to be assigned a movement which aligns the centre axis (339 of the elongate member with the centre axis (34) of the recess, characterized in that the elongate member (19, 19') is applied to an end part of the cylinder (9) by means of a holder (20) which has a recess (20'') running through it for the elongate member, in that the holder has a first surface (40) which interacts, preferably via an elastic element (32), with a flange (37) on the elongate member and in so doing causes the flange to press against a second surface (39) on or at the said cylinder part, so that the elongate member is controlled in the axial direction and is displaceable (35, 36) against friction in the radial direction.

2. Device according to Patent Claim 1, characterized in that the said elastic element (32), for example an O-ring, effects the said friction function, which elastic element, by being acted upon axially, is arranged to allow the elongate member to remain in the laterally offset, new position.

3. Device according to Patent Claim 1 or 2, characterized in that the holder (20) has the outer shape of a truncated cone and is fixed to the cylinder via a flange (20a) which is arranged at the maximum diameter of the truncated cone, and in that an outer surface (40) of the truncated cone, at the smallest diameter of the truncated cone, interacts with the elastic element and/or the flange (37) of the elongate member.

## Patentansprüche

1. Vorrichtung zur Sicherstellung des wirksamen, im Wesentlichen nicht-kritischen Funktionierens eines Stoßdämpfers (1) mit einem Zylinder (9) und einer in diesem Zylinder angeordneten Kolben-Kolbenstangen-Anordnung (10, 11, 12), die zumindest zwei, nacheinander auf der Kolbenstange (10) angeordnete Kolben (11, 12), eine in der Mitte befindliche Aussparung (21) für den Fluß von Medium zwischen den Ober- und Unterseiten (U, U', U") der Kolben und ein längliches Element (19) einschließt, das im Inneren des Zylinders angeordnet ist, und dessen Zweck darin besteht, sich - mit einem Eindringungsgrad, der dadurch bestimmt wird, in welcher Entfernung von einer Endposition sich die Kolben befinden - in die Aussparung hinein zu erstrecken, um die Dämpfungsfähigkeit des Stoßdämpfers in Abhängigkeit vom Eindringungsgrad zu variieren, indem es besagten Fluß von Medium durch die Aussparung beeinflußt, wobei das längliche Element (19,19') so angebracht ist, daß es in Diagonalrichtung (35, 36) des Zylinder verschoben werden kann, und es - für den Fall einer Verschiebung a der Mittelachsen (33, 34) der Aussparung und des länglichen Elements gegeneinander - möglich ist, daß das längliche Element infolge der Wechselwirkung zwischen dem länglichen Element und der Kolben-Kolbenstangen-Anordnung über die Aussparung (21) zu einer Bewegung veranlaßt wird, durch welche die Mittelachse (33) des länglichen Elements in eine Linie mit der Mittelachse (34) der Aussparung gebracht wird, dadurch gekennzeichnet, daß das längliche Element (19, 19') mittels eines Halters (20), der mit einer durch ihn hindurch gehenden Aussparung (20") zur Aufnahme des länglichen Elements versehen ist, an einem Endteil des Zylinders (9) angebracht wird, daß der Halter eine erste Oberfläche (40) hat, die - vorzugsweise über ein elastisches Element (32)- mit einem Flansch (37) an dem länglichen Element in Wechselwirkung steht, und dadurch bewirkt, daß der Flansch gegen eine zweite Oberfläche (39) auf oder an besagtem Zylinderteil drückt, so daß das längliche Element in Axialrichtung kontrolliert wird und in Radialrichtung gegen Reibung verschiebbar (35, 36) ist.

2. Vorrichtung nach Anspruch 1, dadurch gekennzeichnet, daß besagte Reibungsfunktion durch besagtes elastisches Element (32), z. B. einen O-Ring, bewirkt wird, das durch axiale Krafteinwirkung dahingehend beeinflußt wird, daß es das Verbleiben des länglichen Elements in der seitlich verschobenen neuen Position gestattet.

3. Vorrichtung nach Anspruch 1 oder 2, dadurch gekennzeichnet, daß der Halter (20) die äußere Form eine Kegelstumpfes hat und über einen am größten Durchmesser des Kegelstumpfes angeordneten Flansch (20a) am Zylinder befestigt ist, und daß eine äußere Oberfläche (40) des Kegelstumpfes am kleinsten Durchmesser des Kegelstumpfes mit dem elastischen Element und/oder dem Flansch (37) des länglichen Elements in Wechselwirkung steht.

## Revendications

1. Dispositif destiné à garantir un fonctionnement efficace et essentiellement non critique dans un amortisseur de chocs (1) qui possède un cylindre (9) et, placé dans ce cylindre, un ensemble (10, 11, 12) à pistons et tige de piston qui comporte au moins deux pistons (11, 12) placés l'un après l'autre sur une tige (10) de piston, et une cavité centrale (21) destinée à l'écoulement de fluides entre les côtés supérieur et inférieur (U, U', U") des pistons, et un organe allongé (19) placé à l'intérieur du cylindre et qui est destiné à s'étendre dans la cavité avec un certain degré de pénétration qui est fonction du rapprochement des pistons et d'une position d'extrémité pour faire varier la capacité d'amortissement de l'amortisseur, en fonction du degré de pénétration, par action sur la circulation des fluides dans la cavité, et dans lequel l'organe allongé (19, 19') est monté afin qu'il puisse être déplacé en direction transversale (35, 36) du cylindre, et, lorsqu'il existe un écart (a) entre les axes (33, 34) des centres de la cavité et de l'organe allongé, il est possible que l'organe allongé, du fait de l'interaction entre l'organe allongé et l'ensemble à pistons et tige de piston par l'intermédiaire de la cavité (21), doive effectuer un déplacement qui aligne l'axe central (33) de l'organe allongé sur l'axe central (34) de la cavité, caractérisé en ce que l'organe allongé (19, 19') est appliqué sur une partie d'extrémité du cylindre (9) à l'aide d'un organe de maintien (20) qui a une cavité (20") formée à l'intérieur pour l'organe allongé, en ce que l'organe de maintien a une première surface (40) qui interagit, de préférence par l'intermédiaire d'un élément élastique (32), avec un flasque (37) placé sur l'organe allongé et, dans cette opération, provoque l'application par le flasque d'une pression contre une seconde surface (39) qui se trouve sur la partie de cylindre ou au niveau de celle-ci, si bien que l'organe allongé est commandé en direction axiale et peut se déplacer (35, 36) malgré le frottement en direction radiale.

2. Dispositif selon la revendication 1, caractérisé en ce que l'élément élastique (32), tel qu'un joint torique, remplit cette fonction de frottement, l'élément élastique, lorsqu'il subit une action axiale, étant destiné à permettre à l'organe allongé de rester dans la nouvelle position décalée latéralement.

3. Dispositif selon la revendication 1 ou 2, caractérisé en ce que l'organe de maintien (20) a une forme externe de tronc de cône et est fixé au cylindre par un flasque (20a) qui est placé au diamètre maximal du tronc de cône, et en ce qu'une surface externe (40) du tronc de cône, au plus petit diamètre du tronc de cône, interagit avec l'élément élastique et/ou le flasque (37) de l'organe allongé.
